# EUROPÄISCHE PATENTSCHRIFT

(11) **EP 0 615 805 B1**
(45) Veröffentlichungstag und Bekanntmachung des Hinweises auf die Patenterteilung: **03.09.1997**
(21) Anmeldenummer: 94102013.3
(22) Anmeldetag: 10.02.1994
(51) Int. Cl.: B23B 31/12

(54) **Spannfutter**
Chuck
Mandrin

(30) Priorität: 12.02.1993 DE 4304251
(43) Veröffentlichungstag der Anmeldung: 21.09.1994
(73) Patentinhaber: Zettl, Otto, D-87463 Reicholzried (DE)
(72) Erfinder: Zettl, Otto, D-87463 Reicholzried (DE)
(74) Vertreter: Hübner, Hans-Joachim, Dipl.-Ing.

(56) Entgegenhaltungen:
- EP-A- 0 054 774
- DE-A- 3 610 671
- US-A- 1 372 577
- US-A- 1 776 675

## Beschreibung

Die Erfindung betrifft eine Spannfuttereinheit mit den Merkmalen des Oberbegriffes von Patentanspruch 1.

Eine derartige Spannfuttereinheit ist aus der EP 0054774-B1 bekannt. Der Drehkörper ragt mit seinem schaftseitigen Ende in eine längliche Axialbohrung des Schaftes hinein, ist dort drehbar gelagert und hat einen Flansch, mit dem er sich an einer Ringschulter des Schaftes axial abstützt. Der Flansch des Drehkörpers weist am Umfang eine Schneckenradverzahnung auf und steht mit einer im Schaft gelagerten, tangential zum Drehkörper angeordneten Schnecke in Eingriff. Durch Einsetzen eines Werkzeuges in das Schneckenende von außen kann der Drehkörper gedreht werden um das Schiebeglied axial zu vestellen, wodurch die Spannbacken geöffnet bzw. geschlossen werden. Der Schaft des Gehäuses, der eine sogenannte Werkzeugaufnahme bildet, hat an seinem maschinenseitigen Ende eine bestimmte Gestaltung, um den Schaft mit der Maschinenspindel einer Bohr- oder Fräsmaschine zu kuppeln. In der Praxis gibt es eine Vielzahl von Werkzeugaufnahmetypen. Als Beispiel seien nur die verschiedenen Steilkegelausführungen genannt. Um das bekannte Spannfutter für die verschiedenen Maschinen einsetzen zu können, muß eine größere Zahl von Spannfuttern hergestellt werden, die sich lediglich durch den Schafttyp für die jeweilige Arbeitsmaschine unterscheiden.

Die US-A-1,776,675 zeigt ein Spannfutter das nur für Ständerbohrmaschinen, nicht aber für numerisch gesteuerte Werkzeugmaschinen geeignet ist, da es sich in Arbeitsdrehrichtung nachspannt in Gegenrichtung aber öffnet, was auch schon bei schnellem Spindelstop auftreten kann. Das Spannfutter hat eine Kopfhülse mit 3 winklig zur Drehachse liegenden Bohrungen, in denen je eine Spannbacke verschiebbar gelagert ist, die an einer Innenfläche Gewindenuten aufweist, mit denen sie in einen konischen Gewindeabschnitt eines zentralen Innenkörpers eingreift, auf dem die Kopfhülse drehbar gelagert ist. Der Innenkörper steht über die Kopfhülse nach hinten vor und weist eine konische Innenbohrung zum Einstecken eines Spindelschaftes auf. Da die Kopfhülse drehbar sein muß, kann sie nicht unmittelbar mit dem Schaft verbunden werden.

Aufgabe der Erfindung ist es, die eingangs genannte Spannfuttereinheit im Aufbau und in der Montage zu vereinfachen und kompakter zu gestalten, sowie für die Verbindung mit unterschiedlichen Spindelschäften geeignet zu machen.

Diese Aufgabe wird beim Spannfutter mit den Merkmalen des Oberbegriffes von Patentanspruch 1 durch dessen Kennzeichnugsmerkmale gelöst.

Dank der Erfindung bildet die Kopfhülse mit sämtlichen für die Spannfunktion des Spannfutters notwendigen Einbauteilen eine vormontierte Baueinheit. Diese Baueinheit erlaubt eine rationelle Serienfertigung und braucht lediglich noch auf einen Schaft aufgeschraubt zu werden, der die axiale Abstützung der Einbauteile des komplettierten Spannfutters im praktischen Einsatz übernimmt. Die Erfindung erlaubt eine Trennung des Spannfutters in die vorbeschriebene voll funktionsfähige Baueinheit einerseits und den Schaft andererseits. Die Schäfte bzw. Werkzeugaufnahmen erhalten eine wesentlich kostengünstiger herstellbare Gestalt und dies wirkt sich wegen der Vielzahl von unterschiedlichen Schafttypen stark rationalisierend aus. Der Benutzer muß nicht mehr komplette Spannfutter beziehen, sondern benötigt lediglich noch die vorgefertigte Baueinheit, da er diese nur noch mit dem schon vorhandenen Schaft zu verschrauben braucht. Auch im Reparaturfall wirkt sich die neue Erfindung günstig aus, da lediglich die Baueinheit und nicht mehr das ganze Spannfutter ausgetauscht werden muß.

Weiterbildungen der Erfindung bestehen darin, daß der Drehkörper in der Kopfhülse gelagert ist, die mit ihrem schaftseitigen Ende über den Drehkörper axial vorsteht. Beim eingangs genannten Stand der Technik war die Gestaltung genau umgekehrt, denn der Drehkörper stand über die Kopfhülse vor und ragte in den Schaft hinein. Gemäß einer weiteren Ausgestaltung weist der Drehkörper - wie beim eingangs genannten Stand der Technik - einen Außenflansch auf, dessen schaftseitige Stirnfläche an einer Stützfläche des Spannfutters anliegt. Beim Stand der Technik war diese Stützfläche dem Schaft zugeordnet, während demgegenüber bei dem neuen Spannfutter ein Druckring vorgesehen ist, an dem sich der Drehkörper drehbar axial abstützt, wobei der Druckring in der Kopfhülse radial gehalten und z.B. mittels eines in die Kopfhülse eingesetzten Sprengringes oder durch Einschrauben des Druckringes gegen axiales Verschieben gesichert ist. Die Kopfhülse steht vorteilhafterweise auch über den Druckring schaftseitig in axialer Richtung vor. Nachdem die einzelnen Einbauteile in die Kopfhülse eingebaut sind und der Druckring gegen Verschieben gesichert ist, bildet die fertige Baueinheit einen Verkaufsartikel, der beispielsweise vom Kunden durch Aufschrauben auf einen vorhandenen Schaft zu einem Spannfutter ergänzt werden kann.

Eine Weiterbildung der Erfindung ist noch darin zu sehen, daß der Drehkörper einen Kegelradkranz aufweist, der mit einem Antriebskegelrad in Eingriff steht, das in der Kopfhülse bzw. einem Kopfhülseneinsatz mit die Kopfhülsenachse schneidender Radialachse drehbar gelagert ist und von außen zugängliche Kupplungsmittel für das Werkzeug aufweist. Die Kopfhülse hat eine Radialbohrung und der Kopfhülseneinsatz eine radiale rotationssymmetrische Ausnehmung, die wenigstens im radial innen liegenden Bereich sich zur Kopfhülsenachse hin konisch verjüngend ausgebildet ist und in der wenigstens der größte Teil des Antriebskegelrades aufgenommen ist. Vorzugsweise ragt der äußere Teil dieses Antriebskegelrades in die Radialbohrung der Kopfhülse hinein, womit die Kopfhülse mit dem Kopfhülseneinsatz durch dieses Antriebskegelrad gegen Relativdrehung gesichert ist. Die Ausbildung des Drehkörpers mit einem Kegelradkranz ermöglicht es, diesen Drehkörper als einfaches Kegelrad auszubilden, das vorzugsweise mit einem schaftseitigen Bund ausgestattet ist, der im Druckring drehbar gelagert ist.

Anhand der Zeichnung, die Ausführungsbeispiele zeigt, wird die Erfindung näher beschrieben.

Es zeigt:
- FIG. 1: einen Axialschnitt durch die neue Kopfhülse des Spannfutters,

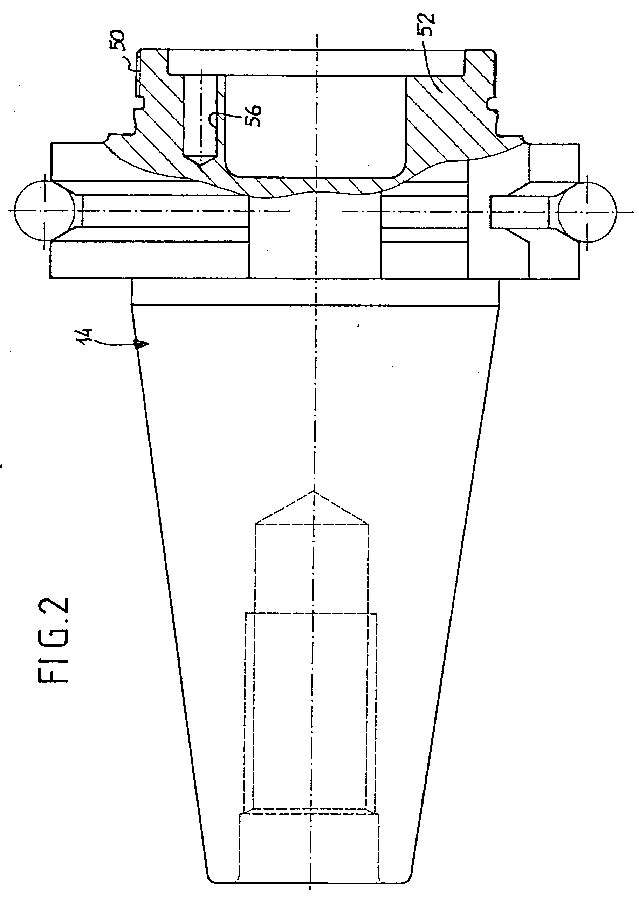

- FIG. 2: eine teilweise geschnittene Ansicht eines mit der Kopfhülse gemäß Figur 1 zu verschraubenden Schaftes,

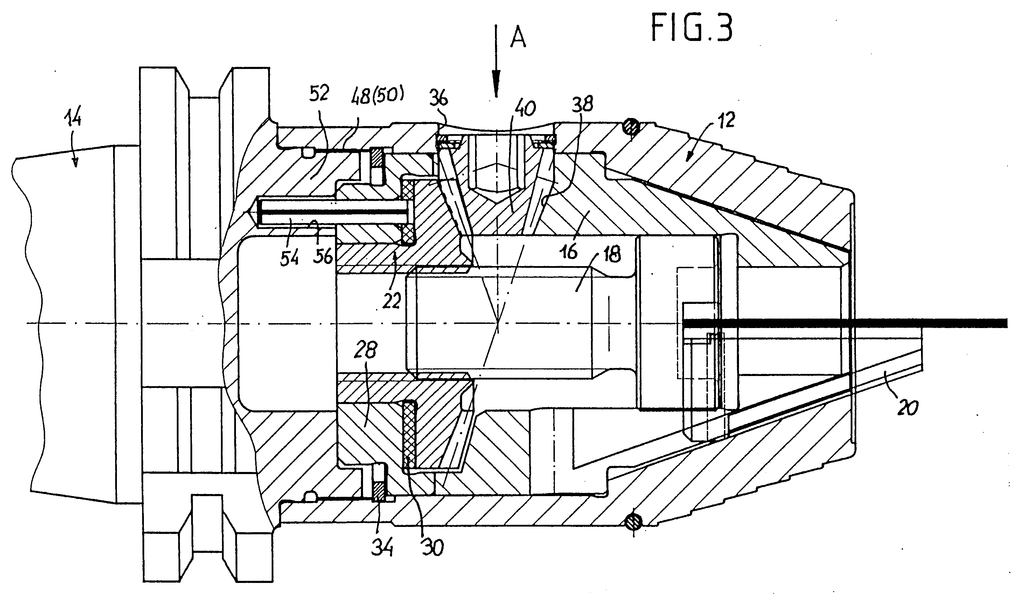

- FIG. 3: einen Axialschnitt durch das aus Kopfhülse und Schaft zusammengesetzte Spannfutter,
- FIG. 4: eine Ansicht in Richtung der Pfeile A in Figuren 1 und 3, und
- FIG. 5: einen Axialschnitt durch eine abgewandte Ausführung einer Spannfuttereinheit.

Ein Spannfutter 10 besteht aus einer Kopfhülse 12 und einem Schaft 14, der hier als Steilkegel-Werkzeugaufnahme dargestellt ist. In der Kopfhülse 12 befindet sich ein Kopfhülseneinsatz 16, dessen Vorderende konisch ausgebildet ist und sich an einer entsprechenden konischen Innenfläche der Kopfhülse 12 anlegt. In einer zylindrischen Bohrung des Einsatzes 16 ist ein Schiebeglied 18 verschiebbar gelagert, an dem kopfseitig drei umfangsversetzte Radialnuten angeordnet sind, in welchen je eine Spannbacke 20 radial verschieblich geführt sind. Die Spannbacken 20 sind ihrerseits in Axialschlitzen des Einsatzes 16 geführt, wodurch das Schiebeglied 18 mit dem Einsatz 16 undrehbar gekuppelt ist. Beim Verschieben des Schiebegliedes 18 gleiten die Spannbacken 20 mit ihrem Außenflächen an der konischen Innenfläche der Kopfhülse 12. Das soweit beschriebene Spannfutter 10 ist im wesentlichen von herkömmlichem Aufbau.

Der rückwärtige Schaft des Schiebegliedes 18 hat ein Außengewinde, das in ein Innengewinde eines Drehkörpers 22 verschraubbar eingreift. Dieser Drehkörper 22 hat einen rückseitigen Bund 24 der einstückig mit einem vorderseitigen Flansch 26 ausgebildet ist. Der Bund 24 ist in einem Druckring 28 drehbar gelagert, der seinerseits in der Kopfhülse 12 eingepaßt ist, wobei in diesem Ausführungsbeispiel eine gewisse Drehbarkeit zwischen Druckring 28 und Kopfhülse 12 vorhanden ist.

Der Drehkörper 22 stützt sich am Druckring 28 über einen Gleitring 30 ab, der zwischen der rückwärtigen Stirnfläche des Flansches 26 des Drehkörpers 22 und der vorderen Stirnfläche des Druckringes 28 eingesetzt ist. Der Druckring 28 hat einen nach vorn weisenden topfartigen Rand, der den Flansch 26 des Drehkörpers 22 mit Spiel umfaßt und dessen spannbackenseitige Stirnfläche 32 die rückseitige Stirnfläche des Kopfhülseneinsatzes 16 abstützt. Der Druckring 28 ist seinerseits mittels eines Sprengringes 34 in der Kopfhülse 12 axial abgestützt.

Die Kopfhülse 12 weist eine Radialbohrung 36 auf, die in der Montagestellung mit einer rotationssymmetrischen Ausnehmung 38 des Einsatzes 16 koaxial fluchtet. Diese Ausnehmung 38 hat einen äußeren zylindrischen Abschnitt und einen in Radialrichtung längeren konischen Abschnitt. In dieser Ausnehmung 38 ist ein Antriebsritzel 40 in Form eines Kegelrades drehbar gelagert, das mit einem Kegelradkranz 42 in Antriebseingriff steht, welcher an der vorderseitigen Stirnfläche des Flansches 26 des Drehkörpers 22 ausgebildet ist. Das äußere Ende des Antriebsritzels 40 reicht mit seinem zylindrischen Abschnitt in die Radialbohrung 36 der Kopfhülse 12 hinein, wodurch der Einsatz 16 in der Kopfhülse 12 undrehbar gehalten ist. Mittels einer Paßring-Sprengringkombination 44 wird das Antriebsritzel 40 radial gesichert. Ein Innenmehrkant 46 des Antriebsritzels 40 erlaubt das Drehen mittels eines Werkzeuges.

Die Kopfhülse 12 mit ihren sämtlichen Einbauteilen, nämlich Einsatz 16, Schiebeglied 18, Spannbacken 20, Drehkörper 22, Druckring 28, Gleitring 30, Antriebsritzel 40 und dessen Axialsicherung 44, sowie Sprengring 34 bildet eine vormontierte Spannfuttereinheit, die auch ohne den Schaft 14 - hinsichtlich des Spannvorganges - voll funktionsfähig ist. Im Betrieb wird der Schaft 14 nur noch zur Kupplung des Spannfutters mit einer Werkzeugmaschinenspindel und zur Übertragung der Axialkräfte auf diese Spindel benötigt. Der Schaft 14 enthält keinerlei für die Spannfunktion notwendigen Einbauteile. Wichtig ist, daß die gesamte Einbaugruppe innerhalb der Kopfhülse 12 untergebracht ist, wobei die Kopfhülse vorzugsweise schaftseitig über diese Einbaugruppe vorsteht, um eine problemlose Verbindung der Kopfhülse 12 mit dem Schaft 14 zu gestatten. Zu diesem Zweck weist die Kopfhülse 12, an die Ringnut für den Sprengring 24 schaftseitig angrenzend, ein Innengewinde 48 auf, in das ein Außengewinde 50 an einem vorderseitigen Bund 52 des Schaftes 14 paßt. Die Verschraubung 48, 50 ist als Klemmverschraubung ausgebildet, sodaß ein selbsttätiges Lösen der Verschraubung während des Betriebes ausgeschlossen ist. Die aus Kopfhülse 12 und deren Einbauten bestehende Spannfuttereinheit ist mit allen Schäften verbindbar, sofern diese nur einen vorstehenden Bund mit passendem Außengewinde 50 aufweisen. Die Axiallänge des Bundes 52 ist unkritisch. Die Kopfhülse 12 wird soweit aufgeschraubt, bis die Stirnfläche des Bundes 52 des Schaftes 14 an der rückseitigen Stirnfläche des Druckringes 28 zur Anlage kommt, wodurch der Sprengring 34 von Axialkräften entlastet wird. Die Kraftübertragung von den Spannbacken 20 über Schiebeglied 18 und Drehkörper 22 erfolgt über den Druckring 28 auf den Bund 52 des Schaftes 14. Im Ausführungsbeispiel ist noch ein Sicherungsstift 54 gezeigt, der den Druckring 28 axial durchsetzt und spannbackenseitig in eine Bohrung des Gleitringes 30 eingreift. Dieser Stift 54 ragt schaftseitig aus dem Druckring 28 hinaus und tritt bei Montage mit einem Schaft 14 in eine entsprechende Axialbohrung 56 des Bundes 52 ein. Der Stift 54 ist kein notwendiges Bauteil des Spannfutters 10, bildet jedoch eine Möglichkeit den Gleitring 30 und den Druckring 28 beim Drehen des Drehkörpers 22 gegen ein Mitdrehen zu sichern. Bei Verwendung dieses Stiftes 54 als Mitdrehverhinderung ist es beim Aufschrauben der Kopfhülse 12 auf den Schaft 14 erforderlich, daß für eine - wenn auch schwergängige Drehbarkeit - des Druckringes 28 in der Kopfhülse 12 gesorgt wird, worauf eingangs schon hingewiesen worden ist. Eine Drehsicherung des Druckringes 28 läßt sich alternativ aber auch durch einen radialen Paßstift in der Kopfhülse 12 realisieren, womit das schaftseitig vorstehende Ende des Stiftes 54 entfallen kann.

Im vorstehenden Ausführungsbeispiel ist der Drehkörper sowohl radial als auch axial am Druckring 28 abgestützt, der seinerseits sehr einfach mittels des Sprengringes 34 in der Kopfhülse 12 gesichert werden kann. Der Druckring 28, Gleitring 30 und Sprengring 34, können in einer vereinfachten Ausführungsform entfallen. Die schaftseitige Stirnfläche des Flansches 26 des Drehkörpers 22 würde dann unmittelbar oder unter Zwischenlage eines Gleitringes an der vorderen Stirnfläche des Schaftes 14 bzw. dessen Bundes 52 anliegen. Die Radiallagerung des Drehkörpers 22 erfolgt dann unmittelbar in der Kopfhülse oder in einer axialen Verlängerung des Kopfhülseneinsatzes 16.

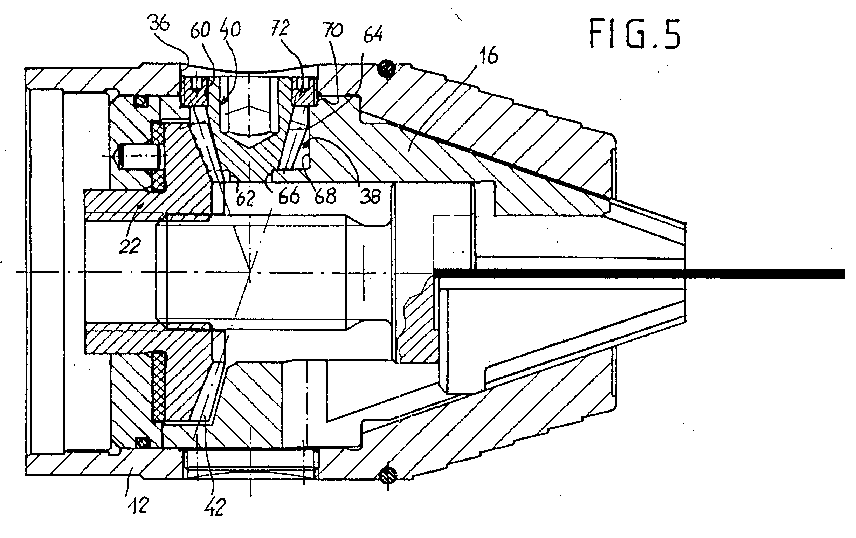

Die Abwandlung der Spannfuttereinheit nach Figur 5 betrifft die Ausbildung und Lagerung des Antriebsritzels 40. Dies weist einen äußeren zylindrischen Bund 60 und einen inneren zylindrischen Bund 62 sowie den konischen Verzahnungsabschnitt 64 auf. Die rotationssymmetrische Ausnehmung 38 im Einsatz 16 weist drei gestufte zylindrische Bohrungsabschnitte 66, 68, 70 auf. Der radial innen liegende Bohrungsabschnitt 66 ist teilumfangsgeschlossen und erstreckt sich um einen Umfangswinkel von etwa 270°. In den Öffnungsbereich tritt die Kegelradverzahnung 42 ein. Dieser Bohrungsabschnitt lagert den Bund 62 des Ritzels 40. Der mittlere Bohrungsabschnitt größeren Durchmessers schafft Raum für die Verzahnung 64 des Ritzels 40, die die Umfangsfläche dieses Bohrungsabschnittes 66 nicht berührt. Auch dieser Bohrungsabschnitt ist über einen Teil seiner Länge teilumfangsgeschlossen. Durch seine Öffnung tritt die Verzahnung 42 des Drehkörpers 22 mit derjenigen des Ritzels 40 in Eingriff. In den radial außen liegenden Bohrungsabschnitt 70 größten Durchmessers greift ein Schraubring 72 mit einem Paßbund ein, der seinerseits in der ein Innengewinde aufweisenden Radialbohrung 36 der Kopfhülse 12 eingeschraubt ist. Der Schraubring 72 lagert den äußeren Bund 60 des Ritzels 40. Da die Bunde 60, 62 von der, die Verzahnung 64 tragenden konischen Kernfläche des Ritzels jeweils unter Bildung von Ringschultern abgesetzt sind, ist das Ritzel in beiden Richtungen gegen axiales Verschieben gesichert. Da der Schraubring 72 an der Ringschulter des äußeren Bohrungsabschnittes 70 eine feste Anlage hat, ist das Ritzel mit exakt vorgegebenem Axialspiel in der Ausnehmung 38 des Einsatzes 16 gelagert.

Der Schraubring hat die weitere Funktion, daß der Einsatz 16 in der Kopfhülse 12 gegen Relativdrehung und -verschiebung gesichert ist, denn der Schraubring 72 erstreckt sich in radialer Richtung sowohl in die Kopfhülse 12 als auch in den Einsatz 16.

Anstelle der beschriebenen Ausführung kann auch der äußere Bohrungsabschnitt 70 der Stufen-Ausnehmung 38 ein Innengewinde aufweisen, sodaß der Schraubring 72 in diesen Bohrungsabschnitt eingeschraubt ist, wobei dann die Radialbohrung 36 in der Kopfhülse dem Außendurchmesser des Schraubringes 72 entspricht.

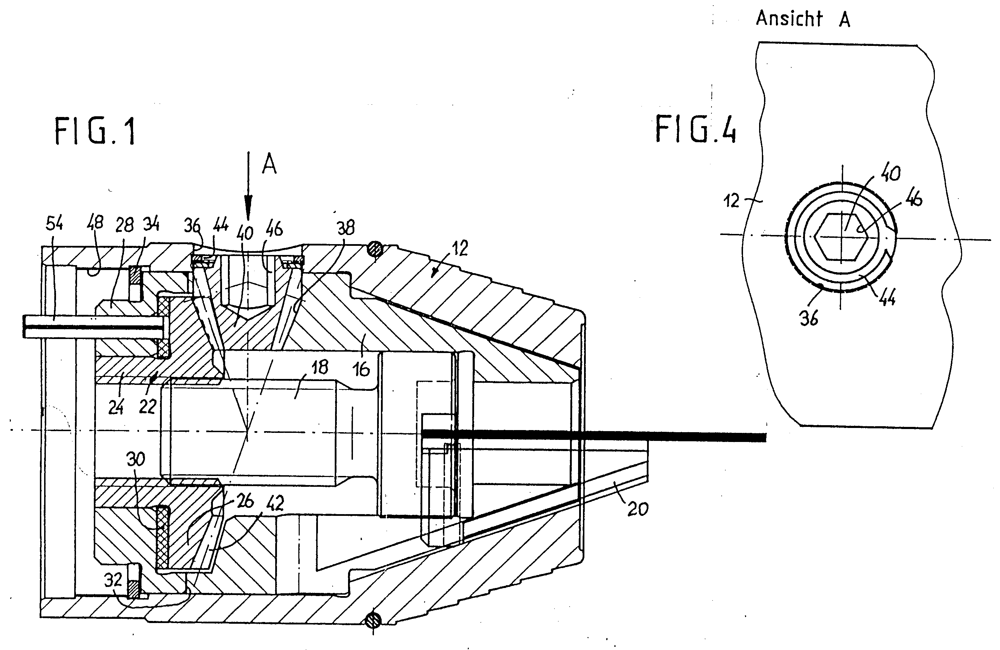

Die Ausführung der Ritzellagerung gemäß Fig. 5 ist derjenigen gemäß Fig. 1 überlegen, weil die Verzahnung 64 keine Führungs- und Lagertunktion mehr zu übernehmen hat. Die Reibung des Ritzels 40 beim Drehen ist erheblich geringer. Dadurch ist eine höhere Spannkraft erzielbar.

Die Ritzellagerung gemäß Fig. 5 ist nicht nur in Verbindung mit der erfindungsgemäßen Spannfuttereinheit einsetzbar, bei der alle Einbauteile in die Kopfhülse integriert sind, sondern führt zu den geschilderten Vorteilen auch bei Spannfuttern, bei denen Einbauten in den Schaft integriert sind.

## Patentansprüche

1. Spannfuttereinheit mit einer Kopfhülse (12), die zum lösbaren Aufschrauben auf einem, in eine Maschinenspindel einer numerisch gesteuerten Werkzeugmaschine einsetzbaren Schaft (14) bestimmt ist und mit diesem ein Spannfutter bildet, in welchem folgende Einbauteile (16, 18, 20, 22, 28, 30, 40) vorgesehen sind: ein verschiebbar gelagertes Schiebeglied (18), eine Anzahl am Vorderende des Schiebegliedes (18) positionierter, radial beweglicher und an einer Innenkonusfläche der Kopfhülse (12) oder eines Kopfhülseneinsatzes (16) verschiebbar geführter Spannbacken (20), ein unverschiebbarer, drehbar gelagerter Drehkörper (22), der mit dem Schiebeglied (18) in Schraubeingriff steht und eine Verzahnung aufweist und ein im Spannfuttermantel drehbar gelagertes, von außen zugängliches Antriebsritzel (40) das mit der Verzahnung des Drehkörpers (22) in Antriebseingriff steht, der seinerseits rückseitig - ggf. unter Zwischenschaltung eines Druckringes (28) - zur Abstützung durch den Schaft (14) ausgebildet ist, **dadurch gekennzeichnet, daß** die Spannbacken (20), das Schiebeglied (18), der Drehkörper (22) und das Antriebsritzel (40) innerhalb der Kopfhülse (12) angeordnet und gelagert sind und die Kopfhülse (12) mit ihren Einbauteilen (16-22, 28, 30, 40) eine vormontierte Baueinheit darstellt, die nach dem Aufschrauben ihrer Kopfhülse (12) auf den Schaft (14) das Spannfutter bildet.

2. Spannfuttereinheit nach Anspruch 1, **dadurch gekennzeichnet, daß** die Kopfhülse (12) alle Einbauteile (16-22, 28, 30, 40) zum schaftseitigen Ende hin überragt und an dem überragenden Ende das Schraubgewinde trägt.

3. Spannfuttereinheit nach Anspruch 1 oder 2, **dadurch gekennzeichnet, daß** der Drehkörper (22) einen Außenflansch (26) aufweist, dessen schaftseitige Stirnfläche ggf. unter Zwischenlage eines Gleitringes (30) an einem Druckring (28) drehbeweglich axial abgestützt ist, der seinerseits in der Kopfhülse (12) axial unverschiebbar oder allenfalls schwerverschieblich ist.

4. Spannfuttereinheit nach Anspruch 3, **dadurch gekennzeichnet, daß** ein schaftseitiger Bund (24) des Drehkörpers (22) im Druckring (28) drehbar gelagert ist.

5. Spannfuttereinheit nach Anspruch 3 oder 4, **dadurch gekennzeichnet, daß** der am spannbackenseitigen Ende radiale Führungsschlitze für die Spannbacken (20) aufweisende Kopfhülseneinsatz (16) sich schaftseitig am Druckring (28) axial abstützt, dessen schaftseitige Stirnfläche eine Kontaktfläche mit dem Schaft (14) des Spannfutters (10) bildet.

6. Spannfuttereinheit insbesondere nach einem der Ansprüche 1 bis 5, **dadurch gekennzeichnet, daß** das Antriebsritzel (40) ein Kegelzahnrad mit radial liegender Achse ist und an beiden stirnseitigen Enden je einen Bund (60, 62) aufweist und mit seinem außenliegenden Bund (60) unter Bildung einer Ringschulter in einem Schraubring (72) drehbar gelagert und axial abgestützt ist, der in einer radialen Bohrung (36) der Kopfhülse (12) eingepaßt ist und mit seinem innenliegenden Bund (62) in einem ersten Bohrungsabschnitt (66) des Kopfhülseneinsatzes (16) drehbar gelagert und mit einer Ringschulter an diesem Einsatz (16) axial abgestützt ist und daß der zwischen beiden Bunden (60, 62) befindliche Verzahnungsabschnitt (64) in einem zweiten Bohrungsabschnitt (68) des Einsatzes (16) mit Radialspiel aufgenommen ist, wobei beide Bohrungsabschnitte (66, 68) teilumfangsgeschlossen sind und der zweite Bohrungsabschnitt (68) einen größeren Druchmesser hat als der erste Bohrungsabschnitt (66).

7. Spannfuttereinheit nach Anspruch 6, **dadurch gekennzeichnet, daß** der Kopfhülseneinsatz (16) einen dritten vollumfänglich geschlossenen Bohrungsabschnitt (70) aufweist, der zu den beiden teilumfangsgeschlossenen Bohrungsabschnitten (66, 68) koaxial liegt, einen Durchmesser aufweist, der größer als jeder der beiden anderen Bohrungsabschnitte (66, 68) ist und der in der Bohrung (36) der Kopfhülse (12) mündet und daß der Schraubring (72) in den dritten Bohrungsabschnitt (70) eingreift und den Kopfhülseneinsatz (16) mit der Kopfhülse (12) verdrehsicher kuppelt.

8. Spannfuttereinheit nach Anspruch 7, **dadurch gekennzeichnet, daß** der dritte Bohrungsabschnitt (70) des Kopfhülseneinsatzes (16) eine Ringschulter aufweist, die eine axiale Anschlagfläche für den Schraubring (72) bildet.

9. Spannfuttereinheit nach einem oder mehreren der Ansprüche 1-8, **dadurch gekennzeichnet, daß** die Kopfhülse (12) einstückig ausgebildet ist.

10. Spannfutter mit einer Spannfuttereinheit nach einem oder mehreren der Ansprüche 1-9, **dadurch gekennzeichnet, daß** die Spannfuttereinheit mit einem, in eine Arbeitsmaschinenenspindel einsetzbaren Schaft lösbar verbunden ist und daß die Verbindungsstelle die Schnittstelle der Spannfutter-Maschinenspindel-Kombination bildet.

## Claims

1. A chuck unit comprising a head socket (12) detachably screwed onto a shaft (14) insertable into a machine spindle of a numerically controlled machine tool and, together with the shaft (14), forming a chuck, in which the following components (16, 18, 20, 22, 28, 30, 40) are provided: a displaceably mounted slide member (18), a plurality of radially movable clamping jaws (20) arranged at the front end of the slide member (18) and slidably guided on an inner conical surface of the head socket (12) or a head socket insert (16), a non-slidable, rotatably mounted, rotary member (22) screwed to the slide member (18) and provided with toothing, and an externally accessible drive pinion (40) rotatably mounted in the chuck casing and in driving engagement with the toothing of the rotary member (22), the rear end of which is formed so as to be supported by the shaft (14), optionally with the interposition of a thrust ring (28), characterised in that the clamping jaws (20), the slide member (18), the rotary member (22) and the drive pinion (40) are arranged and mounted inside the head socket (12), and the head socket (12) with its components (16-22, 28, 30, 40) is a preassembled structural unit forming the chuck after the head socket (12) has been screwed onto the shaft (14).

2. A chuck unit according to claim 1, characterised in that the head socket (12) projects beyond all the components (16-22, 28, 30, 40) at the shaft end and carries the screw thread on the projecting end.

3. A chuck unit according to claim 1 or 2, characterised in that the rotary member (22) has an outer flange (26), the face of which on the shaft side is rotationally axially supported on a thrust ring (28), optionally with the interposition of a slide ring (30), the thrust ring (28) for its part being axially non-displaceable in the head socket (12) or, at most, displaceable with difficulty.

4. A chuck unit according to claim 3, characterised in that a shaft-end collar (24) of the rotary member (22) is rotatably mounted in the thrust ring (28).

5. A chuck unit according to claim 3 or 4, characterised in that the head socket insert (16), having radial guide slots for the clamping jaws (20) at the clamping-jaws end, is axially supported at the shaft end on the thrust ring (28), the face of which on the shaft side forms a contact surface with the shaft (14) of the chuck (10).

6. A chuck unit in particular according to any one of claims 1 to 5, characterised in that the drive pinion (40) is a bevel gear with a radial axis and has a collar (60, 62) at both ends and is rotatably mounted and axially supported in a threaded ring (72) by means of its outer collar (60) to form an annular shoulder, the threaded ring (72) being fitted in a radial bore (36) of the head socket (12), and is rotatably mounted by means of its inner collar (62) in a first bore portion (66) of the head socket insert (16) and is axially supported on the said insert (16) by means of an annular shoulder, and in that the toothing portion (64), arranged between the two collars (60, 62), is accommodated with radial clearance in a second bore portion (68) of the insert (16), both bore portions (66, 68) being partially circumferentially closed and the second bore portion (68) having a larger diameter than the first bore portion (66).

7. A chuck unit according to claim 6, characterised in that the head socket insert (16) has a third, fully circumferentially closed bore portion (70) arranged co-axially with the two partially circumferentially closed bore portions (66, 68) and having a larger diameter than either of the two other bore portions (66, 68) and ending in the bore (36) of the head socket (12), and in that the threaded ring (72) engages in the third bore portion (70) and connects the head socket insert (16) to the head socket (12) in a torsion-resistant manner.

8. A chuck unit according to claim 7, characterised in that the third bore portion (70) of the head socket insert (16) has an annular shoulder forming an axial stop surface for the threaded ring (72).

9. A chuck unit according to one or more of claims 1 to 8, characterised in that the head socket (12) is formed in one piece.

10. A chuck comprising a chuck unit according to one or more of claims 1 to 9, characterised in that the chuck unit is detachably connected to a shaft insertable into a machine spindle and in that the junction forms the boundary between the chuck and the machine spindle.

## Revendications

1. Ensemble de mandrin de serrage, avec une douille de tête (12) destinée à être vissée, de manière amovible, sur une tige (14) pouvant être placée dans une broche de machine d'une machine-outil à commande numérique et constituant avec cette dernière un mandrin de serrage dans lequel sont prévus les composants (16, 18, 20, 22, 28, 30, 40) suivants une élément coulissant (18) monté de manière déplaçable, un nombre de mâchoires de serrage (20) déplaçables radialement et guidées de manière déplaçable sur une face de cône intérieur de la douille de tête (12) ou d'un insert de douille de tête (16) et positionnées à l'extrémité avant de l'élément coulissant (18), un corps rotatif (22) non déplaçable, monté de manière rotative, qui vient en prise de vissage avec l'élément coulissant (18) et présente une denture, et un pignon d'entraînement (40), monté de manière rotative dans l'enveloppe du mandrin de serrage et accessible de l'extérieur, qui vient en prise d'entraînement avec la denture du corps rotatif (22) qui est réalisé, quant à lui, du côté arrière, éventuellement avec intercalage d'une bague de pression (28), de manière à être supporté par la tige (14), caractérisé par le fait que les mâchoires de serrage (20), l'élément coulissant (18), le corps rotatif (229 et le pignon d'entraînement (40) sont disposés et montés à l'intérieur de la douille de tête (12) et que la douille de tête (12) constitue, avec ses composants (16-22, 28, 30, 40), un ensemble de construction prémonté qui constitue, après le vissage de sa douille de tête (12) sur la tige (14), le mandrin de serrage.

2. Ensemble de mandrin de serrage suivant la revendication 1, caractérisé par le fait que la douille de tête (12) fait saillie, vers l'extrémité du côté de la tige, par rapport à tous les composants (16-22, 28, 30, 40) et porte le filet de vissage à l'extrémité faisant saillie.

3. Ensemble de mandrin de serrage suivant la revendication 1 ou 2, caractérisé par le fait que le corps rotatif (22) présente une bride extérieure (26) dont la face frontale du côté de la tige s'appuie axialement, éventuellement avec intercalage d'une bague coulissante (30), de manière mobile en rotation sur une bague de pression (28) qui est, quant à elle, axialement immobile, ou en tous cas diffilement mobile, dans la douille de tête (12).

4. Ensemble de mandrin de serrage suivant la revendication 3, caractérisé par le fait qu'un collet (24), du côté de la tige, du corps rotatif (22) est monté de manière rotative dans la bague de pression (28).

5. Ensemble de mandrin de serrage suivant la revendication 3 ou 4, caractérisé par le fait que l'insert de douille de tête (16) présentant, à l'extrémité du côté des mâchoires de serrage, des fentes de guidage radial des mâchoires de serrage (20) s'appuie axialement, du côté de la tige, sur la bague de pression (28) dont la face frontale du côté de la tige forme une face de contact avec la tige (14) du mandrin de serrage (10).

6. Ensemble de mandrin de serrage suivant l'une des revendications 1 à 5, caractérisé par le fait que le pignon d'entraînement (40) est une roue dentée conique à axe situé radialement et présente, à chacune des extrémités du côté frontal, un collet (60, 62) et qu'il est monté de manière rotative et s'appuie axialement, par son collet (60) situé extérieurement, tout en formant un épaulement annulaire, dans une bague vissable (72) qui est introduite de manière ajustée dans un alésage radial (36) de la douille de tête (12) et est monté de manière rotative, par son collet situé intérieurement (62), dans un premier segment d'alésage (66) de l'insert de douille de tête (16) et qui s'appuie axialement, par un épaulement annulaire, sur cet insert (16), et que le segment de denture (64) se trouvant entre les deux collets (60, 62) est reçu, avec un jeu radial, dans un second segment d'alésage (68) de l'insert (16), les deux segments d'alésage (66, 68) étant à pourtour partiellement obturé et le second segment d'alésage (69) ayant un diamètre supérieur à celui du premier segment d'alésage (66).

7. Ensemble de mandrin de serrage suivant la revendication 5, caractérisé par le fait que l'insert de douille de tête (16) présente un troisième segment d'alésage (70) à pourtour entièrement obturé qui se situe coaxialement aux deux segments d'alésage (66, 68) à pourtour partiellement obturé, qui présente un diamètre supérieur à celui de chacun des deux autres segments d'alésage (66, 68) et qui aboutit dans l'alésage (36) de la douille de tête (12) et que la bague vissable (72) pénètre dans le troisième segment d'alésage (70) et relie l'insert de douille de tête (16) de manière immobile en rotation à la douille de tête (12).

8. Ensemble de mandrin de serrage suivant la revendication 7, caractérisé par le fait que le troisième segment d'alésage (70) de l'insert de douille de tête (16) présente un épaulement annulaire qui constitue une face de butée axiale pour la bague vissable (72).

9. Ensemble de mandrin de serrage suivant l'une ou plusieurs des revendications 1 à 8, caractérisé par le fait que la douille de tête (12) est réalisée d'une seule pièce.

10. Mandrin de serrage avec un ensemble de mandrin de serrage suivant l'une ou plusieurs des revendications 1 à 9, caractérisé par le fait que l'ensemble de mandrin de serrage est assemblé de manière amovible avec une tige pouvant être placée dans une broche de machine à usiner et que le point d'assemblage constitue l'interface de la combinaison mandrin de serrage-broche de machine.
